# EUROPÄISCHE PATENTANMELDUNG

(11) **EP 2 991 317 A1**
(43) Veröffentlichungstag der Anmeldung: **02.03.2016**
(21) Anmeldenummer: 15001634.3
(22) Anmeldetag: 02.06.2015
(51) Int. Cl.: H04L 29/08, H04L 29/06, H04L 12/16

(54) **VERFAHREN ZUR ANZELGE UND STEUERUNG VON MULTIMEDIALEN INHALTEN AUF EINEM ODER MEHREREN DISPLAYS VON EINER ENTFERNTEN QUELLE AUS**

(30) Priorität: 04.06.2014 DE 102014008344
(71) Anmelder: A+G connect GmbH, 66111 Saarbrücken (DE)
(72) Erfinder: Trola, Rino, 66111 Saarbrücken (DE)

(57) **Zusammenfassung**

Verfahren zur Anzeige und Steuerung von multimedialen Inhalten auf einem oder mehreren Displays von einer entfernten Quelle ("remote device") aus.

Bei bekannten Verfahren ist eine spezielle "streaming device" erforderlich, welche mit demselben Betriebssystem betrieben werden muss wie die "remote device". Darüber hinaus müssen "remote device" und "streaming device" über dasselbe Datennetz miteinander verbunden sein.

Durch den Einsatz eines Application-Servers, bei welchem die Ausgabegeräte zuvor registriert werden, ist eine Darstellung von Inhalten auf den Ausgabegeräten möglich unabhängig von Betriebssystem und verwandtem Datennetzwerk. Die Kommunikation zwischen Ausgabegerät und "remote device" wird über den Application-Server und das WebSocket-Protokoll hergestellt. Die Auswahl der Anzeigegeräte kann besonders anwenderfreundlich durch den Einsatz von QR-Codes erfolgen, welche als Bestandteil der Default-Anzeige auf dem Ausgabegerät eingebettet werden kann.

## Beschreibung

### Technisches Gebiet

Die Erfindung betrifft ein Verfahren zur Darstellung und Steuerung multimedialer Inhalte auf einem oder mehreren Displays von einer entfernten Quelle aus.

### Derzeitiger Stand der Technik

Nach dem derzeitigen Stand der Technik setzt die Darstellung und Steuerung multimedialer Inhalte auf einem Display von einer entfernten Quelle ("remote device") aus voraus, dass das Anzeigegerät mit einer entsprechenden Hardware verbunden ist ("streaming device"), welche die Verbindung zwischen Anzeigegerät und "remote device" herstellt. In diesen Fällen ist eine Verbindung zwischen "streaming device" und "remote device" aufzubauen. Darüber hinaus, sind diese Lösungen abhängig von dem installierten Betriebssystem. Eine Lösung, welche betriebssystem-übergreifend funktioniert und welche nicht voraussetzt, dass "remote device" und "streaming device" über dasselbe Datennetz verbunden sind, ist nach dem aktuellen Stand der Technik nicht bekannt. Ebenso ist nach dem derzeitigen Stand der Technik keine Lösung bekannt, welche es ermöglicht Inhalte gleichzeitig an mehrere Ausgabegeräte, welche sich auch an verschiedenen Orten befinden können, zu übertragen.

### Darstellung der Erfindung

Der Erfindung liegt die Aufgabe zu Grunde, ein Verfahren zu entwickeln, welches die Verbindung von "remote device" und Ausgabegerät ermöglicht, ohne das ein spezielles "streaming device" eingesetzt werden muss. Weiterhin soll diese Lösung von den eingesetzten Betriebssystemen bei den Ausgabegeräten und "remote devices" unabhängig sein und Inhalte auf mehreren Ausgabegeräten zeitgleich darstellen können. Auch soll vermieden werden, dass Ausgabegerät und "remote device" über dasselbe Netzwerk miteinander verbunden sein müssen.

Die voranstehende Aufgabe wird dadurch gelöst, dass die Verbindung zwischen "remote device" und Ausgabegerät über einen speziellen Application-Server erfolgt. Auf Seiten des "remote device" als auch auf Seiten des Ausgabegerätes ist daher jeweils lediglich eine Internetverbindung/Netzwerkverbindung als auch ein Internetbrowser erforderlich, welcher das WebSocket-Protokoll unterstützt. Die Anwendungslogik erfolgt über den Applikationsserver, welcher Komponenten zur Registrierung, Anmeldung und Berechtigung, Session-Management und Event-Management implementiert und einen WebSocket-Server als auch einen Datei-Konverter bereitstellt.

### Ausführungsform

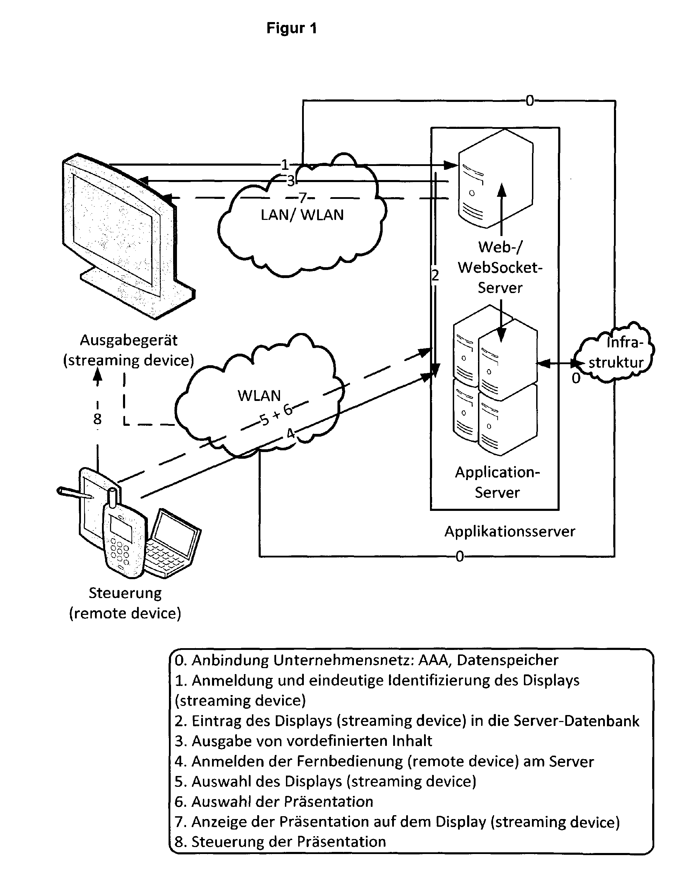

Die Beschreibung der Erfindung nimmt Bezug auf die beigefügte Figur 1. Die relevanten Komponenten sind in dieser namentlich benannt; die einzelnen Abläufe chronologisch nummeriert.

Eine vorteilhafte Ausbildung des Verfahrens sieht die nachfolgenden Komponenten vor: Ausgabegerät, "remote device" und Application-Server.

Ausgabegerät und Application-Server sind zunächst zu konfigurieren (0). Die Vorkonfiguration besteht im Anlegen der zu verwendenden Ausgabegeräte (1) und dem Eintrag des Ausgabegerätes in die Server-Datenbank (2), dem Einbinden der Datenspeicher und der darauf befindlichen Inhalte, und dem Einrichten von Authentifizierung und Autorisierung (0).

Das Ausgabegerät ist entweder ein netzwerkfähiger Client mit eingebautem Monitor (z.B. Notebook) oder eine Kombination aus netzwerkfähigem Client, der einen Monitor ansteuern kann (z.B. Desktop, Thinclient, Kleinstcomputer) und dem eigentlichen Ausgabegerät (z.B. Monitor oder Flachbildschirm-Fernseher). Auf dem Ausgabegerät wird ein Browser mit WebSocket-Unterstützung ausgeführt. Ist kein "remote device" mit dem Ausgabegerät verbunden zeigt das Ausgabegerät einen vordefinierten Inhalt, z.B. Speisekarte, Veranstaltungsplan etc. (3). Bestandteil des vordefinierten Inhaltes ist unter anderem ein QR-Code, welcher die URL zur Verbindung der "remote device" zum Application-Server beinhaltet.

Als "remote device" kann ein beliebiger Internet-Browser dienen, welcher das WebSocket-Protokoll unterstützt. Somit kommen neben herkömmlichen Computern, auch Notebooks, Tablets und Smartphones in Betracht. Ist auf diesen eine Software zum Erfassen von QR-Codes vorhanden, kann die Verbindung zu dem Application-Server durch Einscannen des QR-Codes vom Ausgabegerät erfolgen (4).

Der Application-Server im weiteren Sinne besteht aus: Webserver, Datenbank und Application-Server im engeren Sinne. Der Webserver ermöglicht zum einen die Ausgabe der Inhalte auf dem Ausgabegerät und stellt zum anderen, die Menüs zur Auswahl und Steuerung der Anzeige über die "remote devices" bereit.

In der Datenbank werden sämtliche zum Betrieb erforderlichen Informationen gespeichert. In dem Application-Server im engeren Sinne sind die Anwendungslogik sowie die nachfolgenden Komponenten implementiert: Registrar, Anmeldung & Berechtigung, Session-Management, WebSocket-Server, Konverter, Event-Management.

Alle Ausgabegeräte werden zunächst mit einer eindeutigen Identifikationsnummer am Application-Server registriert (1, 2). Dies ermöglicht das gezielte Auswählen und Ansprechen von Ausgabegeräten. Die Auswahl kann wie oben beschrieben über QR-Codes erfolgen, welche auf dem Bildschirm angezeigt werden, oder durch manuelle Einagbe.

Sodann werden die "remote devices" authentifiziert (4). Sind auf dem Application-Server Inhalte vorhanden, welche dieser Nutzer anzeigen darf, werden diese zur Auswahl auf dem "remote device" angezeigt (6). Ebenso werden diejenigen Displays zur Auswahl angezeigt, welcher der Nutzer ansteuern darf (5). Der Application-Server stellt dem Nutzer nur die Inhalte zur Auswahl bereit, auf deren Zugriff er berechtigt ist. Dabei kann auf bestehende Systeme, die bereits eine Authentifizierung und Berechtigungsverwaltung implementieren, zugegriffen werden (z.B. RADIUS-Server, Domänencontroller). Soweit berechtigt, können auch neue Inhalte vom Benutzer des "remote device" übertragen und dargestellt werden. Alle Daten zur Anzeige befinden sich nur temporär für die Dauer der Nutzung auf dem Application-Server.

Über ein Session-Management werden zu jeder Zeit die registrierten Ausgabegeräte und deren Status ("in Benutzung"/"frei") und die registrierten "remote devices" erfasst. Auch wird über das Session-Management registriert welche "remote devices" gerade auf welches Ausgabegerät zugreift.

Der WebSocket-Server ermöglicht den Aufbau einer bidirektionalen Verbindung zwischen dem Ausgabegerät und der "remote device".

Da nicht alle Dateiformate auf jedem Anzeigegerät dargestellt werden können, werden über einen Konverter die zu präsentierenden Inhalte (z.B. MS Office Dokumente, PDF-Dateien, etc.) in ein universelles Format umgewandelt, welches von den Ausgabegeräten dargestellt werden kann. Der Konverter versieht die anzuzeigenden Inhalte mit einer eindeutigen Presentation-ID, und unterteilt die Inhalte in mehrere Presentation-Items (z.B. jede einzelne Seite einer Präsentation) und legt diese in einer Datenbank an.

Die anzuzeigenden Inhalte werden nach Verbindung mit der "remote device" ausgewählt und die Steuerung der Inhalte erfolgt ebenso über die "remote device" (8). Die Steuerbefehle werden über das Event-Management von den "remote devices" entgegen genommen, ausgewertet und an den WebSocket-Server übergeben. Dieser sendet dann die vom Anwender ausgewählten Inhalte zur Anzeige an das Ausgabegerät.

Das erfindungsgemäße Verfahren weist durch den Einsatz des Application-Servers und des WebSocket-Protokolls den Vorteil auf, dass unabhängig von dem Betriebssystem der "remote device" und unabhängig von dem Betriebssystem der "streaming device" eine Darstellung medialer Inhalte auf einem Ausgabegerät erfolgen kann. Über diese Ausführung wird auch erreicht, das Ausgabegerät und "remote device" nicht notwendigerweise über dasselbe Datennetzwerk miteinander verbunden sein müssen. Über den Einsatz der QR-Codes zur Verbindung der "remote device" zum Application-Server und somit auch zu dem jeweiligen Ausgabegerät ist das Verfahren besonders anwenderfreundlich.

Die Erfindung eignet sich um Anzeigesystemen im laufenden Betrieb Informationen hinzuzufügen.

So werden beispielsweise in Museen oder Ausstellungen oftmals auf Bildschirmen vordefinierte Filme, Informationstafeln und ähnlich angezeigt. Durch dieses Verfahren kann im Rahmen einer Führung jedes Display auf Abruf auch dazu benutzt werden um spezielle Inhalte spontan aufzurufen und anzuzeigen. Geht die geführte Gruppe weiter, kann der ursprüngliche Inhalt fortgeführt werden.

Auch in der Gastronomie ist heute eine Vielzahl von Ausgabegeräten vorhanden um Speisekarten etc. anzuzeigen. Diese Displays können durch das erfundene Verfahren erschlossen werden um spontan weitere Inhalte anzuzeigen.

Es folgt 1 Blatt Zeichnungen.

## Patentansprüche

1. Verfahren zur Anzeige und Steuerung von multimedialen Inhalten auf einem oder mehreren Ausgabegeräten von einer entfernten Quelle aus, **dadurch gekennzeichnet, dass** die Verbindung zwischen dem Ausgabegerät bzw. den Ausgabegeräten und der entfernten Quelle über einen Application-Server erfolgt.

2. Verfahren nach Anspruch 1, **dadurch gekennzeichnet, dass** das Ausgabegerät bzw. die Ausgabegeräte über eine eindeutige Identifikationsnummer auf dem Application-Server registriert werden.

3. Verfahren nach den vorgenannten Ansprüchen 1 und 2, **dadurch gekennzeichnet, dass** über den Application-Server und das WebSocket-Protokoll eine bidirektionale Verbindung zwischen dem Ausgabegerät bzw. den Ausgabegeräten und der entfernten Quelle hergestellt wird.

4. Verfahren nach den vorgenannten Ansprüchen 1 bis 3, **dadurch gekennzeichnet, dass** die darzustellenden multimedialen Inhalte auf dem Application-Server zur Anzeige auf dem Ausgabegerät bzw. den Ausgabegeräten konvertiert werden.

5. Verfahren nach den vorgenannten Ansprüchen 1 bis 3, **dadurch gekennzeichnet, dass** die Auswahl des Ausgabegerätes bzw. der Ausgabegeräte durch Einscannen eines QR-Codes erfolgt, welcher auf dem Ausgabegerät bzw. den Ausgabegeräten eingeblendet wird.
